# EUROPEAN PATENT APPLICATION

(11) **EP 2 402 632 A1**
(43) Date of publication of application: **04.01.2012**
(21) Application number: 11171481.2
(22) Date of filing: 27.06.2011
(51) Int. Cl.: F16J 15/16, F16J 15/447, F03D 11/02

(54) **Active sealing-draining device**

(30) Priority: 29.06.2010 US 826025
(71) Applicant: General Electric Company, Schenectady, NY 12345 (US)
(72) Inventor: Pischel, Klaus, 48431 Rheine (DE)
(74) Representative: Bedford, Grant Richard

(57) **Abstract**

A sealing device (100) is provided. The sealing device (100) is for sealing a space (230) formed by an inner shaft (210) and an outer shaft (220) and for directing a flow of fluid, the inner shaft (210) and the outer shaft (220) being rotatable about a common coaxial axis (250). The sealing device (100) includes an inner seal element (120) adapted for being coupled to the inner shaft (210) so that the inner seal element (120) is locked against rotation relative to the inner shaft (210), the inner seal element (120) including a first inner sealing surface (160). The sealing device (100) further includes an outer seal element (140) adapted for being coupled to the outer shaft (220) so that the outer seal element (140) is locked against rotation relative to the outer shaft (220), the outer seal element (154) including a first outer sealing surface (180). The first inner sealing surface (160) and the first outer sealing surface (180) are adapted to form, by contact with each other, a first seal area (40; 240) including a first channel arrangement (40, 240) including at least one channel configured to actively drain a fluid from the first seal area (40; 240) when the seal elements rotate with respect to each other.

## Description

The subject-matter disclosed herein relates generally to a sealing device and more particularly, to a sealing device for actively draining a fluid, a gearbox with a sealing device, and a wind turbine equipped with a sealing device.

Sealing for preventing fluid leakage or avoiding pollution of rotating equipment is an important issue in different technical applications such as pumps, compressors, or lubricated equipment. Preventing leakage of fluid from the equipment can be difficult, in particular in equipment where the area to be sealed includes rotating shafts, or the like. In the particular case of drive systems, such as those including gearboxes, the rotating shafts typically require sealing against oil loss in the area where the shaft end passes through the stationary housing. For these kinds of applications, sealing devices based on radial shaft seal rings are a known solution for sealing. However, due to material wear, such seal devices are not reliable over extended periods of times. For applications where reliability over time is required, labyrinth seals or glide ring seals represent further known options.

Labyrinth seals generally include a variety of chambers formed between the sealing surfaces of a stationary part and a rotating part. Passage of fluid through the chambers is controlled by centrifugal motion, as well as by the formation of controlled fluid vortices. In this manner, fluid leakage is avoided. In some known labyrinth seals used for gearboxes, the stationary part of the seal is adapted for fluid from the shaft area back to the gearbox interior by the effect of gravity.

However, in some equipment that includes two coaxial cylindrical shafts rotating relative to each other, such as some known gearboxes for wind turbines, draining the seal area by gravity is difficult, in particular when the exit of the inner shaft does not have access to the stationary housing. Further, the sealing effect of at least some known labyrinth seals is not efficient when the shafts do not rotate.

Accordingly, it is desirable to provide a sealing device capable of efficiently sealing the space formed between two cylindrical shafts rotatable relative to each other. Furthermore, it is desirable to provide a sealing device resistant to wear so that it is capable of efficiently and reliably sealing over an extended period.

Various of the embodiments described herein thus include a sealing device which enables efficient sealing of a space formed by an inner shaft and an outer shaft by actively draining a fluid when the shafts rotate relative to a stationary housing. Furthermore, such a sealing device enables reducing wear of the sealing device by the circulation of fluid. In addition thereto, a sealing device according to embodiments described herein enables actively defining a preferential flow of liquid within the space or spaces to be sealed when the shafts rotate.

In one aspect of the present invention, a sealing device is provided. The sealing device is for sealing a space formed by an inner shaft and an outer shaft and for directing a flow of fluid, the inner shaft and the outer shaft being rotatable about a common coaxial axis. The sealing device includes an inner seal element adapted for being coupled to the inner shaft so that the inner seal element is locked against rotation relative to the inner shaft, the inner seal element including a first inner sealing surface. The sealing device further includes an outer seal element adapted for being coupled to the outer shaft so that the outer seal element is locked against rotation relative to the outer shaft, the outer seal element including a first outer sealing surface. The first inner sealing surface and the first outer sealing surface are adapted to form, by contact with each other, a first seal area including a first channel arrangement including at least one channel configured to actively drain a fluid from the first seal area when the seal elements rotate with respect to each other.

In another aspect, another sealing device is provided. The sealing device is for sealing a space formed by an inner shaft and an outer shaft and for directing a flow of fluid, the inner shaft and the outer shaft being rotatable about a common coaxial axis. The sealing device includes an inner seal element adapted for being coupled to the inner shaft so that the inner seal element is locked against rotation relative to the inner shaft, the inner seal element including a first inner sealing surface. The sealing device further includes an outer seal element adapted for being coupled to the outer shaft so that the outer seal element is locked against rotation relative to the outer shaft, the outer seal element including a first outer sealing surface. The first inner sealing surface and the first outer sealing surface are adapted to form, by contact with each other, a first seal area. The sealing device further includes a drain conduit for draining a fluid out of the sealing device, the drain conduit being formed in at least one of the inner seal element or the outer seal element and ending with a conduit end forming an opening adjacent to the respective the first inner sealing surface or the first outer sealing surface so that the drain conduit is in fluid communication with the first seal area. The sealing device further includes an impeller rigidly coupled to the inner seal element or the outer seal element. The sealing device is configured to direct the fluid from the first seal area into the drain conduit by rotation of the impeller.

In yet another aspect, a gearbox including a sealing device is provided. The gearbox includes an inner shaft and an outer shaft, the shafts being rotatable about a common coaxial axis. The sealing device includes an inner seal element attached to the inner shaft, the inner seal element including an inner sealing surface; and, an outer seal element attached to the outer shaft, the outer seal element including an outer sealing surface. A seal area is formed by contact of the inner sealing surface and the outer sealing surface, the seal area including a first channel arrangement configured to actively drain a fluid from the seal area when the seal elements rotate with respect to each other.
Figures 1 to 13 schematically show exemplary embodiments of the systems described herein.
Figure 1 is a sectional view of a portion of an exemplary sealing device.
Figure 2 is a sectional view of a portion of another exemplary sealing device.
Figure 3 is a sectional view of a portion of yet another exemplary sealing device.
Figure 4 is a sectional view of the exemplary sealing device of Figure 3.
Figure 5 is a sectional view of the sealing device of Figure 4 taken along line A-A (shown in Figure 4).
Figure 6 is a sectional view of a portion of yet another exemplary sealing device.
Figure 7 is a sectional view of a portion of a further exemplary sealing device.
Figure 8 is a sectional view of the sealing device of Figure 7 taken along line B-B (shown in Figure 7).
Figure 9 is a sectional view of a portion of an inner seal element according to some embodiments of the sealing device.
Figure 10 is a sectional view of a portion of another further exemplary sealing device.
Figure 11 is a sectional view of a portion of an exemplary gearbox.
Figure 12 is a sectional view of an exemplary wind turbine.
Figure 13 shows a schematic representation of a drain conduit in an outer seal element of a sealing device according to embodiment described herein.

The embodiments described herein include a sealing device for sealing a space formed by an inner shaft and an outer shaft, the shafts being rotatable with respect to a stationary housing, and for directing a flow of fluid. Typically, the inner and the outer shafts are disposed coaxially to each other. The terms inner and outer should be understood with respect to the common coaxial axis shared by the shafts. Typically, the inner shaft is configured to rotate within the outer shaft. The embodiments described herein further include a sealing device which is applicable to a system where the inner shaft axially extends outside of the outer shaft.

The embodiments described herein further include a sealing device for avoiding leakage of a fluid, typically a lubricant, included in a space enclosed by two rotatable coaxial shafts, which are themselves typically enclosed by a stationary housing.

In typical embodiments, the sealing device includes an inner seal element adapted for being coupled to an inner shaft and an outer seal element adapted for being coupled to an outer shaft. Thereby, the seal elements of the sealing device are disposed such that the seal elements rotate jointly with the respective shaft about a common coaxial axis. That is, in typical embodiments, the seal elements are adapted for being coupled to their respective shafts such that the seal elements are locked against rotation relative to the respective shaft. In some embodiments, the coupling of the inner and/or outer seal element to the inner and/or outer sealing shaft is realized by integrally forming the respective seal element on the respective shaft.

As used herein, the term integrally formed is intended to be representative of as being formed in a single piece. In alternative embodiments, the coupling of the inner and/or seal element to the inner and/or outer shaft is realized by providing fastening means, such as bolted, screw, or stud joints, in the respective seal element and the respective shaft so that the respective seal element can be mounted on the respective shaft in a releasable manner.

In some embodiments of the present disclosure, the inner seal element includes an inner sealing surface, and the outer seal element includes an outer sealing surface. Typically, when the seal elements are disposed in the shafts, both first sealing surfaces confront each other forming a seal area by contact.

In some embodiments of the present disclosure, the seal elements are configured for sealing and defining a preferential flow of fluid within the space or spaces to be sealed. Thereby, a sealing device according to the present disclosure not only facilitates a better sealing efficiency, but also enables active draining of fluid from one area of a sealed machine, such as a shaft exit area in a gearbox, into a different area in the sealed machine, such as the interior of the gearbox. Such fluid transfer from one specific area of the machine to be sealed to another area within the machine is implemented in some embodiments of the present disclosure by defining a preferential flow of fluid through the seal area and/or out of the sealing device. Thereby, wear of the sealing device, in particular of the sealing surfaces, is reduced by the lubricating effect of the fluid flowing through the seal area. Thus, a sealing device according to embodiments described herein extends the operating lifetime of the sealing device.

At least some of the embodiments described herein provide a sealing device having a seal area that includes a channel arrangement. The channel arrangement is typically configured for actively draining a fluid through the seal area when seal elements of the sealing device rotate with respect to each other. Thereby, a fluid in the inner space formed by the shafts and close to the area to be sealed is typically actively drained out when the shafts, and consequently the seal elements, rotate relative to each other. When the shafts are stationary, the contact between the inner sealing surface and the outer sealing surface has the effect of sealing the inner space of the shafts. In this manner, the seal area forms a barrier for avoiding fluid leakage. Typically, the channel arrangement is disposed in at least one of the inner sealing surface or the outer sealing surface.

In some embodiments, the sealing area includes a channel arrangement extending along the whole sealing area such that the fluid space and the external space are in fluid communication through the channel arrangement. In such embodiments, the channel arrangement is typically configured so that the sealing device effectively seals the fluid space, even when the shafts do not rotate (i.e., by appropriately selecting the structure, width and length of the channel or channels in the arrangement).

In at least some of the embodiments described herein, the channel arrangement in the seal area is provided in at least one of the inner or outer sealing surfaces. Typically, the channel arrangement is provided in the sealing surface of the seal element corresponding to the fast rotating shaft. As used herein, the term fast rotating shaft is intended to be representative of the shaft configured to rotate at a higher absolute velocity relative to a referential frame stationary to both shafts.

Within the following description of the drawings, the same reference numbers refer to the same components. Generally, only the differences with respect to the individual embodiments are described.

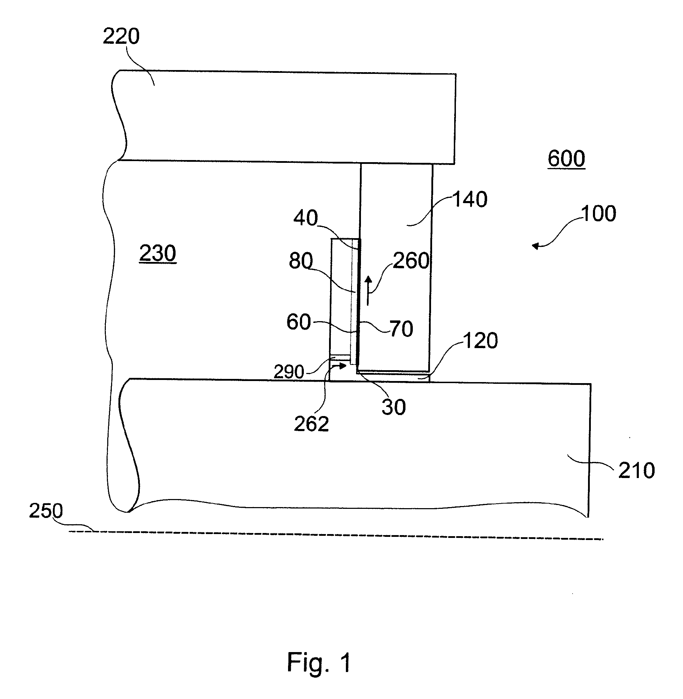

Figure 1 shows a sectional view of a portion of an exemplary sealing device 100. Sealing device 100 in Figure 1 provides sealing between an inner shaft 210 and an outer shaft 220, both being concentric to each other and rotatable about a common coaxial axis 250. In the exemplary embodiment, a fluid space 230 is formed between inner shaft 210 and outer shaft 220. In typical embodiments, fluid space 230 is filled with a fluid such as lubricating oil, chemical fluids, or the like. Typically, sealing device 100 is for avoiding leakage of the fluid in fluid space 230 towards an external space 600. As used herein, the term external space is intended to be representative of a space situated at a different side with respect to sealing device 100, such as fluid space 230. That is, sealing device 100 separates the space formed between the shafts, fluid space 230, from external space 600.

The exemplary sealing device 100 in Figure 1 includes an inner seal element 120 and an outer seal element 140 respectively attached to inner shaft 210 and outer shaft 220. Further, as Figure 1 shows, inner seal element 120 has an inner sealing surface 60, and outer seal element 140 has an outer sealing surface 70. In the exemplary embodiment, the sealing surfaces are in contact with each other when the elements are disposed on the shafts. Thereby, a seal area 40 is formed by contact of the sealing surfaces. In the exemplary embodiment, the sealing surfaces, and consequently the seal area 40, are oriented perpendicular to common coaxial axis 250. Alternatively, the sealing areas have another orientation, as set forth below. In the exemplary embodiment, sealing device 100 further includes an entry conduit 290 built in the inner seal element 120 in an area close to the inner shaft 210.

In the exemplary embodiment, entry conduit 290 communicates fluid space 230 with seal area 40. Alternatively, inner seal element 120 includes a plurality of entry conduits 290 formed in inner seal element 120. In the exemplary embodiment, entry conduit 290 fluidly communicates seal area 40 with fluid space 230. During operation of the exemplary seal device 100, it is typical that fluid is actively suctioned from fluid space 230 into seal area 40 through entry conduit 290 in the direction of arrow 262 when the seal elements rotate.

In the exemplary embodiment of Figure 1, a channel arrangement 80 is provided on inner sealing surface 60. According to alternative embodiments, channel arrangement 80 is provided only on a portion of the corresponding sealing surface. A configuration of the sealing device where channel arrangement 80 is provided on inner sealing surface 60 is desirable when inner shaft 210, and consequently inner seal element 120, is configured to rotate at a higher absolute velocity than outer shaft 220.

In the exemplary embodiment of Figure 1, when inner seal element 120 rotates with a higher velocity than outer seal element 140, channel arrangement 80, in collaboration with the centrifugal force acting on the fluid, actively drains fluid towards fluid space 230, that is, in the direction of arrow 260. Thereby, the exemplary sealing device 100 facilitates the transfer of fluid in a region of the fluid space 230 to another region of the fluid space 230 by directing the flow of fluid in the direction of arrows 262 and 260. In the exemplary embodiment, sealing device 100 enables transfer of fluid from a region close to inner shaft 210 to a region close to outer shaft 220. When the inner and outer shafts are stationary with respect to each other, the contact between the inner sealing surface 60 and outer sealing surface 70 effectively seals fluid space 230. Therefore, the exemplary seal device 100 forms an effective barrier against leakage of fluid when the seal elements rotate and when the seal elements remain stationary.

In the exemplary embodiment shown in Figure 1, sealing device 100 includes a closed sealing surface 30 for sealing the space formed by the shafts from an external space in a fluid-tight manner. Closed sealing surface 30 is typically formed by tight contact over a whole radial section of the sealing surfaces. Closed sealing surface 30 is typically formed by contact of non-patterned (i.e., without a channel arrangement) areas of the sealing surfaces. In alternative embodiments, sealing device 100 does not include a closed sealing surface. For example, sealing device 100 may be configured such that channel arrangement 80 extends along the whole contact surface of inner seal element 120 with outer seal element 140.

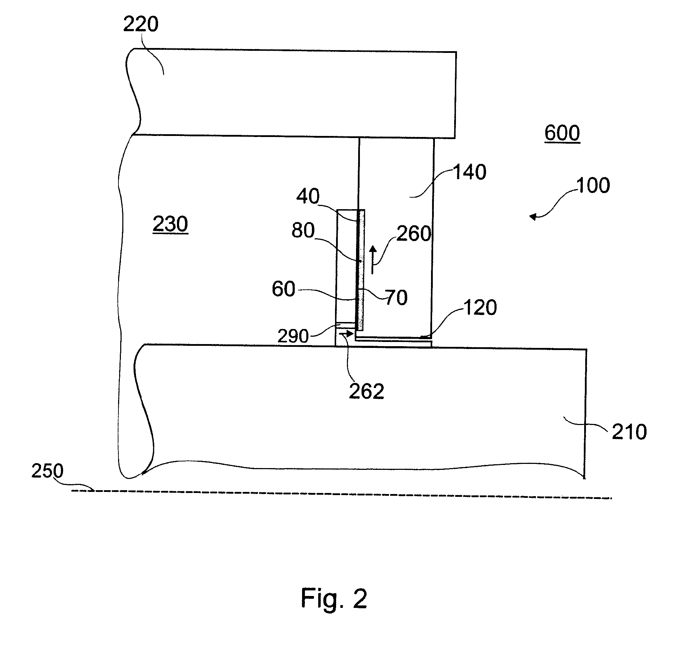

Figure 2 shows a sectional view of a portion of another exemplary sealing device 100. In the exemplary sealing device 100, channel arrangement 80 is provided on outer sealing surface 70. Such a configuration of channel arrangement 80 is particularly desirable when outer shaft 220, and consequently outer seal element 140, is configured to rotate at a higher absolute velocity than inner shaft 210. In this configuration (i.e., when outer seal element 140 rotates with a higher velocity than inner seal element 120) channel arrangement 80, in collaboration with the entry conduit 290 and the centrifugal force, actively drains a fluid from a region of fluid space 230 to another region of fluid space 230. In the exemplary embodiment, the flow of fluid when the seal elements rotate follows the direction of arrow 262 and arrow 260. The further functionality of this exemplary embodiment is equivalent to the functionality of the exemplary embodiment set forth above with regard Figure 1.

In typical embodiments of the present disclosure, at least one of the seal elements is typically provided as a single integrally built part. Alternatively, at least one of the seal elements is typically modularly built, for example, constituted by multiple attached parts. In particular, the channel arrangement is typically provided as a part modularly built in a seal element. Thereby, the channel arrangement is typically easily exchanged, if required.

According to some embodiments of the present disclosure, a drain conduit is formed in at least one of the seal elements, the drain conduit ending with an opening on the sealing surface. In particular embodiments, the sealing device might include a plurality of such drain conduits. Typically, the drain conduit communicates with a draining area in the space formed between both shafts through another opening in the corresponding seal element. In some embodiments, the drain conduit is formed in the outer seal element. In alternative embodiments, the drain conduit is formed in the inner seal element.

In some embodiments of the present disclosure, the channel arrangement is adapted for actively draining a fluid from the seal area towards the drain conduit when the seal elements rotate with respect to each other. In these embodiments, draining is effected by an active displacement of fluid trapped in the channel or channels in the arrangement. This active displacement is typically combined, depending on the configuration of the sealing device, with the effect of the centrifugal force acting on the fluid. It is noted that, even in the case where both shafts rotate at the same speed, the sealing device is typically configured so that the fluid is actively drained towards the drain conduit through the channel arrangement by the effect of the centrifugal forces acting on the fluid.

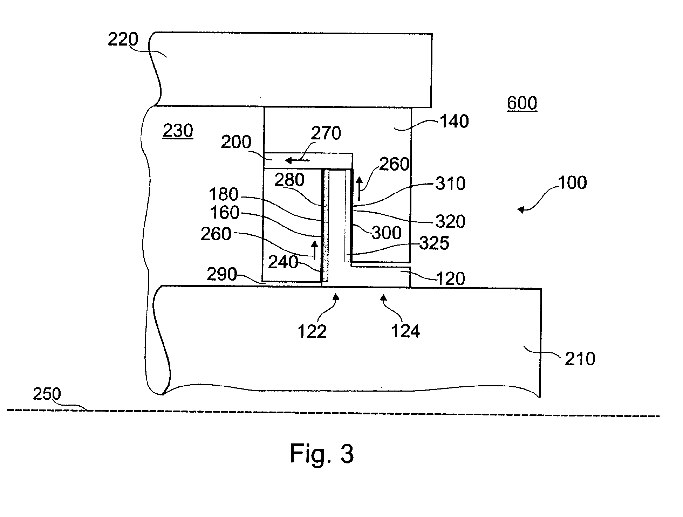

Figure 3 shows a sectional view of a portion of yet another exemplary sealing device 100. The exemplary sealing device 100 includes a drain conduit 200 formed in outer seal element 140. The exemplary embodiment in Figure 3 provides a sealing device 100 including two seal areas formed between inner seal element 120 and outer seal element 140. In the exemplary embodiment, both seal areas are apart from each other and are formed substantially parallel to each other. In alternative embodiments, both seal areas are disposed in a non-parallel manner with respect to each other. In the exemplary embodiment, a first seal area 240 is formed close to the fluid space 230. A second seal area 300 of the exemplary sealing device is formed close to the external space 600. In typical embodiments, drain conduit 200 is in fluid communication with at least one of first seal area 240 or second seal area 300. In the exemplary embodiment of Figure 3, drain conduit 200 is in fluid communication with both seal areas.

In the exemplary embodiment of Figure 3, drain conduit 200 is configured to establish a fluid communication between first seal area 240 and fluid space 230. In typical embodiments, drain conduit 200 is formed in an outer (with respect to the common coaxial axis 250) region of the outer seal element 140. That is, as shown in the exemplary sealing device 100, drain conduit 200 is formed in a region of outer seal element 140 distal from the inner shaft 210 and proximal to outer shaft 220. This outward region is generally an annular region in the outer (with respect to the common coaxial axis 250) one third of the outer seal element 140. Such a configuration of sealing device 100 takes advantage of the centrifugal forces acting on the fluid when the seal elements rotate and facilitates draining fluid from the seal area towards drain conduit 200. It is typically advantageous, although not necessary, to drain fluid into a space sufficiently apart from inner shaft 210, as in the exemplary sealing device 100.

In the exemplary sealing device 100 shown in Figure 3, an entry conduit 290 is formed by a clearance between outer seal element 140 and the inner shaft 210. Typically, entry conduit 290 acts as a first sealing barrier to avoid fluid leakage, in particular when the seal elements are stationary. When the sealing elements rotate relative to each other, fluid which penetrates entry conduit 290 flows into first seal area 240 following the direction of arrow 262. This fluid is then actively driven through first seal area 240 by a first channel arrangement 280 towards drain conduit 200, following the direction of arrow 260 in Figure 3. The circulation of fluid through first seal area 240 typically produces a lubricating effect on both contact surfaces. It is noted that circulation of fluid through the seal areas is typically not limited to circulation of fluid through the channel arrangement.

Typically, a small portion of fluid also circulates between non-patterned contacting sealing surfaces, thereby enhancing lubrication of the seal areas. In a typical application of the sealing device 100, fluid reaching the drain conduit 200 through the first seal area 240 is evacuated towards the fluid space 230, flowing in the direction marked by arrow 270 depicted in the figure so that fluid is actively drained back into fluid space 230 and away from the seal. In this manner, the active flow of fluid in a sealing device according to at least some of the embodiments described herein facilitates draining of fluid into particular regions of fluid space 230 when the shafts are rotating. In typical embodiments, an increase in the rotating speed of the shafts results in an increase in the draining efficiency of the sealing device.

In the exemplary embodiment of Figure 3, inner seal element 120 has a second inner sealing surface 310. Second inner sealing surface 310 is adapted to form by contact with a second outer sealing surface 320 of outer seal element 140 a second seal area 300 apart from first seal area 240. Thus, sealing efficiency is facilitated by providing a larger sealing surface between the elements of the seal. Typically, a lubricating film of fluid from fluid space 230 is formed in the second seal area. In this manner, wear of the second sealing surfaces is typically further reduced, thus extending the operating lifetime of sealing device 100.

According to at least some of the embodiments described herein, the sealing device includes a second channel arrangement disposed in a second seal area, or a portion thereof. The exemplary sealing device 100 of Figure 3 includes a second channel arrangement 325 disposed in second seal area 300. In the exemplary embodiment, the drain conduit 200 extends to the second seal area 300. Typically, second channel arrangement 325 is arranged for actively draining a fluid from second seal area 300 toward drain conduit 200 when the seal elements rotate with respect to each other. Accordingly, draining of fluid in the sealing device is further facilitated by the rotation of the seal element including the channel arrangement.

Analogously as the first channel arrangement according to some of embodiments described above, the second channel arrangement in the second seal area is typically arranged on the second sealing surface of the seal element to be coupled to the fast rotating shaft. A second channel arrangement according to some of the embodiments described herein facilitates actively draining of a fluid from the second seal area.

As set forth above, a seal device according to some of the described embodiments includes a first seal area and a second seal area which communicate with a drain conduit. Thereby, fluid in both seal areas is typically drained from the sealing device through drain conduit back into a fluid space. It is noted that the second seal area is not essential for the functioning of the sealing device. Such a configuration of the sealing device with a second seal area is typically advantageous for applications of the sealing device where a higher sealing and/or draining efficiency is favored.

As set forth above, in at least some of the embodiments described herein, the drain conduit, the seal areas, and the channel arrangements are arranged such that fluid in the seal areas is drained in collaboration with the centrifugal forces (i.e., fluid in the seal areas is drained in the outward radial direction). The exemplary embodiments in Figures 1 to 11 show such a configuration of the seal device taking advantage of the centrifugal force in the direction indicated by arrow 260.

The configuration of the exemplary sealing device 100 shown in Figure 3 is typically advantageous when inner shaft 210 is configured to rotate at an absolute higher rotational speed than outer shaft 220. More specifically, in the exemplary sealing device 100, the first and second channel arrangements are respectively disposed on the first and second inner sealing surfaces. In this manner, when the shafts rotate, the channel arrangements rotate with respect to outer shaft 220. This relative rotation of the channel arrangements facilitates actively forcing the fluid included within the seal areas to flow towards the drain conduit 200 by the channel arrangement.

In alternative embodiments where outer shaft 220 is configured to rotate at an absolute higher rotational speed than inner shaft 210, it is typical to provide the first and second channel arrangements in the first and second outer sealing surfaces, respectively. In this manner, these embodiments typically take advantage of the relative rotation of the channel arrangements with respect to inner shaft 210 when the shafts rotate. In alternative embodiments, sealing device 100 includes a combination of channel arrangements provided on sealing surfaces of both seal elements. Such embodiments are typically advantageous when the rotational speed of the shafts is not preconfigured.

The term "substantially parallel" in the present disclosure should be generally understood as a deviation of plus/minus 15 degrees from the exact parallel orientation. The term "substantially perpendicular" in the present disclosure should be generally understood as "forming an angle between 75 degrees and 105 degrees" with respect to a given axis or plane.

In at least some embodiments of the sealing device, the first sealing surfaces and the second sealing surfaces are respectively disposed for forming a first seal area and a second seal area substantially parallel to each other. Typically, the seal surfaces are oriented perpendicular to the coaxial rotational axis of the seal elements.

At least some embodiments provide a sealing device including a plurality of seal areas disposed, e.g., along the axial direction of the sealing device. Typically, the plurality of seal areas is implemented by providing multiple parallel members in the inner seal element. These parallel members extend in a radial direction of the seal device and register portions of the outer seal element. Alternatively, the plurality of seal areas is implemented by sequentially disposing multiple inner and outer seal elements on the shafts and along their longitudinal axis.

In the exemplary embodiments shown in the figures, drain conduit 200 is oriented substantially perpendicular to the seal surfaces. In alternative embodiments, a sealing device provides a drain conduit so configured as to be tilted with respect to a common coaxial axis of the seal elements.

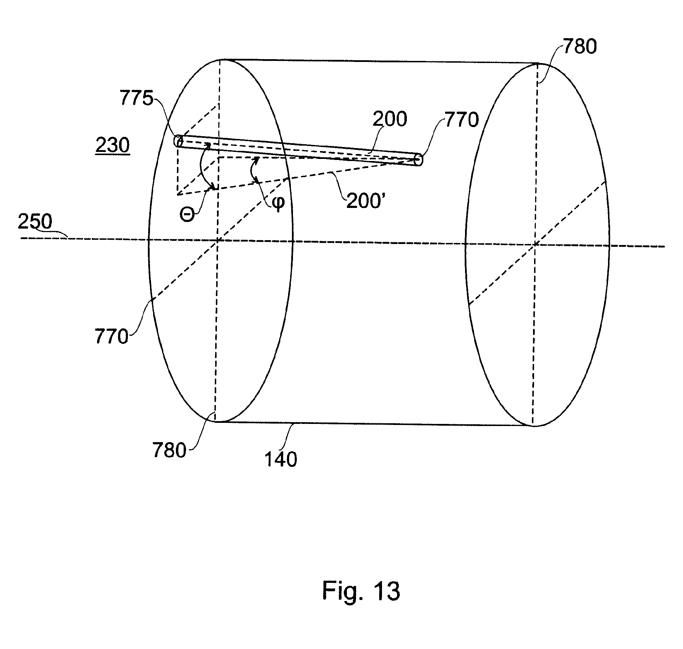

Figure 13 shows a schematic representation of a drain conduit in an outer seal element of a sealing device according to a further embodiment. In this embodiment, drain conduit 200 forms an elevation angle θ with its orthogonal projection 200'. An elevation angle θ of drain conduit 200 facilitates draining fluid trapped within drain conduit 200 into the fluid space 230 by taking advantages of the centrifugal forces generated by the rotation of outer seal element 140. In one embodiment, drain conduit 200 forms an elevation angle θ ranging from about 10 degrees to 60 degrees. Alternatively, drain conduit 200 may form any suitable elevation angle θ that enables a sealing device to function as described herein. For example, drain conduit 200 may form an elevation angle θ such as, but not limited to, 40 degrees or less, such as 20 degrees, or 25 degrees, or more, such as 35 degrees. As shown in the exemplary embodiment of Figure 13, drain conduit 200 is typically arranged such that the distance in the orthogonal direction of drain conduit 200 with respect to common coaxial axis 250 increases in the direction from an end 770 of drain conduit 200 within the outer seal element 140 to an end 775 of drain conduit 200 adjacent to fluid space 230.

In the exemplary embodiment of Figure 13, drain conduit 200 is disposed within outer seal element 240 forming a helix angle ϕ with respect to common coaxial axis 250 in the horizontal plane. More specifically, in the exemplary embodiment, helix angle ϕ is defined as the angle formed by orthogonal projection 200' of the drain conduit 200 a helix angle ϕ with the reference plane formed by a diameter 780 of outer seal element 140 and the common coaxial axis 250. Typically, diameter 140 is oriented parallel to the sealing surfaces of sealing device 100. Typically, helix angle ϕ is formed in the preferential direction of rotation of the sealing device. In this manner, drain conduit 200 is orientated in the direction impinged to the fluid by the rotation of the seal element including drain conduit 200. In this manner, a particular orientation of drain conduit 200 facilitates drainage of fluid within drain conduit 200 into fluid space 230. In other words, the orientation of the drain conduit 200 with a helix angle ϕ in the direction of rotation of the seal element 140 collaborates with the rotational flow impinged on the fluid by the rotation of the seal elements for facilitating an efficient drainage of fluid within the drain conduit 200. In one embodiment, drain conduit 200 forms a helix angle ϕ ranging from about 5 degrees to 50 degrees. Alternatively, drain conduit 200 may form any suitable helix angle ϕ that enables a sealing device to function as described herein. For example, drain conduit 200 may form a helix angle ϕ such as, but not limited to, 40 degrees or less, such as 20 degrees, or 15 degrees or more, such as 30 degrees.

In some of embodiments, as set forth below, an outer seal element further includes an impeller. Within the present disclosure, an impeller should be understood as an element which, by rotation, is capable of increasing the pressure and flow of a fluid in a predetermined direction. Typically, the impeller is configured to direct a flow of fluid into the drain conduit and in the direction in which a drain conduit is oriented. In this manner, active draining of the fluid is further enhanced by combining an impeller and a particular orientation of the drain conduit which takes advantages of the rotational flow impinged on the fluid.

According to some embodiments, the half cross-section of inner seal element 120 is L-shaped, that is, inner seal element 120 has a portion 122 thereof extending in a radial direction of seal device 100 and another portion 124 thereof extending in an axial direction of seal device 100. Typically, radial portion 122 of inner seal element 120 is sandwiched by outer seal element 140. In at least some embodiments, radial portion 122 registers with outer seal element 140. In typical embodiments, axial portion 124 is secured (i.e. attached) to inner shaft 210 in a movable manner. For example, inner seal element 120 may be secured to inner shaft 210 by an anti-rotation lock.

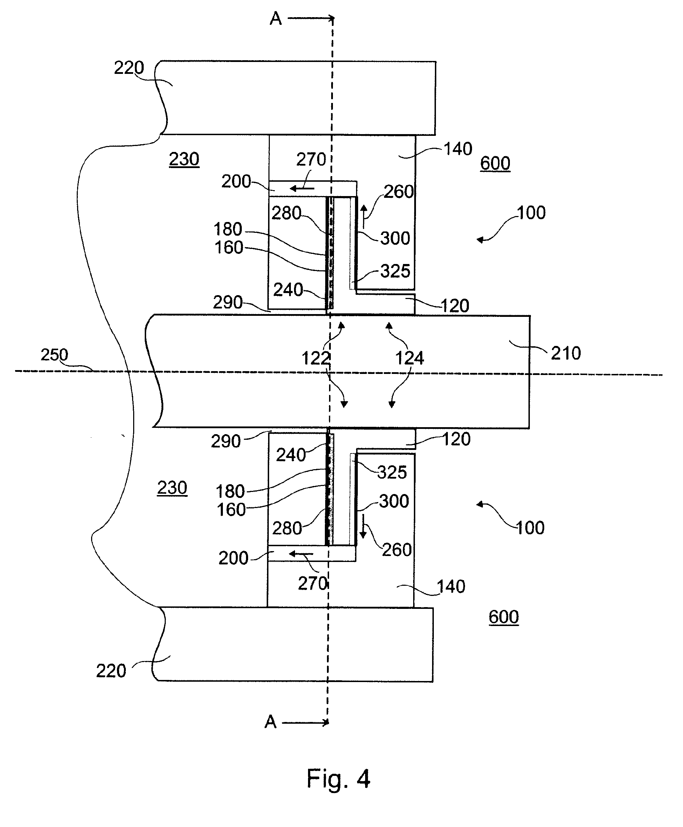

Figure 4 shows a sectional view of the exemplary sealing device of Figure 3. In the exemplary embodiment, inner seal element 120 includes a radial portion 122 orthogonally extending with respect to common coaxial axis 250. In some embodiments, radial portion 122 has the shape of a disc. In alternative embodiments, radial portion 122 has the shape of a truncated cone. In other alternative embodiments, radial portion 122 has a half cross-section section in the form of a truncated cone.

In some embodiments, inner seal element 120 includes an axial portion 124 extending along common coaxial axis 250. Typically, axial portion 124 has the form of a central tubular extension or hub. In the exemplary embodiment, axial portion 124 is oriented substantially parallel to common coaxial axis 250. In the exemplary embodiment, radial portion 122 and axial portion 124 are oriented perpendicular to each other. Typically, inner seal element 120 is coupled to inner shaft 210 such that axial portion 124 faces external space 600 and radial portion 122 faces fluid space 230. Typically, outer seal element 140 is designed according to the shape of inner seal element 120 so that the outer sealing surfaces are oriented to register the inner sealing surfaces.

Typically, a channel arrangement of a sealing device according to at least some embodiments described herein includes a groove or grooves formed on the surface of the corresponding seal element. Typically, the groove or grooves are oriented such that fluid enclosed within the channel arrangement is forced to flow along the seal area where the channel arrangement is disposed. According to typical embodiments, the orientation of the groove or grooves in the channel arrangement is such that the fluid therein is forced towards, or directly into, a drain conduit formed in the seal device. Typically, the groove or grooves are designed to direct a flow of fluid in collaboration with the centrifugal force caused by the rotation of the seal elements. According to typical embodiments, the channel arrangement, the groove or grooves are arranged as a spiral. In alternative embodiments, the groove or grooves are arranged as a set of spirals that, typically, are arranged equally spaced from each other.

In typical embodiments, the channel arrangement includes at least one groove formed as a spiral oriented to match a predetermined rotational direction of the sealing surface on which it is formed (i.e., typically, the spiral increases radially in the direction of rotation of the sealing surface). The channel arrangement may include a groove formed such that it enables the sealing device to function as described herein, such as, but not limited to, as a curved groove or grooves radially extending towards a drain conduit, as a straight groove or grooves oriented perpendicular to a common coaxial axis of the seal, or as a set of grooves forming a plurality of crossing spirals.

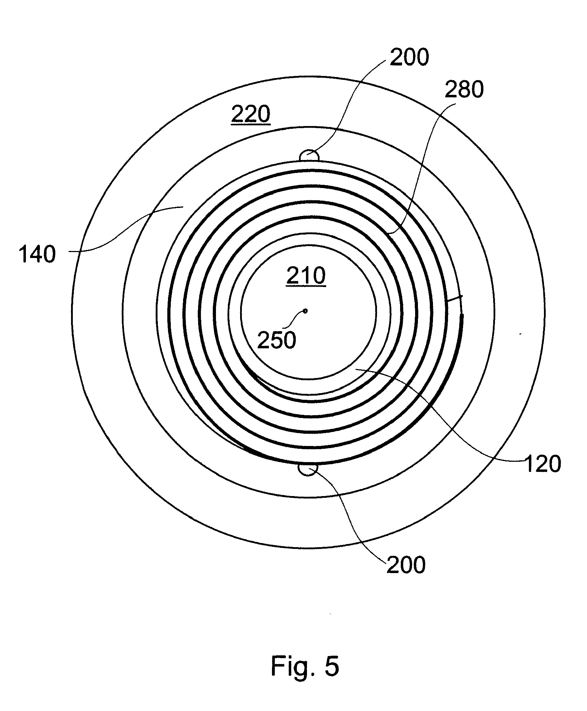

Figure 5 shows a sectional view of the exemplary sealing device of Figure 4 taken along line A-A (shown in Figure 4). In the exemplary embodiment, a channel arrangement 280 is disposed on seal element 120. In the exemplary embodiment, channel arrangement 280 is shaped as a spiral radially increasing from common coaxial axis 250 towards an outer region of seal element 120. Alternatively, channel arrangement 280 is shaped as discussed above. In at least some embodiments, inner seal element 120 rotates at a higher velocity than outer seal element 140. In such embodiments, fluid from fluid space 230 in an area close to an inner portion of channel arrangement 280 would typically flow towards an outer portion of channel arrangement 280 by the combined effect of the force applied on the fluid by the rotating spiral and the centrifugal forces acting on the fluid. In this manner, the fluid would be drained towards drain conduit 200. In typical embodiments, channel arrangement 280 is designed such that fluid enclosed within the channel or channels is directly forced into drain conduit 200.

In typical embodiments, the orientation of a channel arrangement is predetermined taking into account the rotational characteristics of the shafts. For example, in the embodiment shown in Figure 5, the spiral radially increases in a counter-clockwise direction. Typically, such a configuration of a sealing device is more efficient when inner-shaft 210 rotates in a clockwise direction. Alternatively, channel arrangement 280 is oriented in the opposite direction to the direction on which a fast-rotating shaft is configured to rotate. As set forth above, in accordance to some typical embodiments, drain conduit 200 communicates with fluid space 230.

In such embodiments, the rotation of the seal elements typically causes channel arrangement 280 to force a fluid within a seal area towards drain conduit 200. In this manner, a fluid is typically drained back into fluid space 230. Further, as long as fluid space 230 is not subject to a sufficiently high pressure, fluid in drain conduit 200 is prevented from re-entering a seal area by a rotation of channel arrangement 280. In typical embodiments, a flow of fluid effected by channel arrangement 280 is enhanced by the centrifugal forces acting on the fluid when a seal element rotates.

As set forth above, according to at least some of the embodiments described herein, sealing device 100 is typically provided with a closed sealing surface 330 adopted for fluid-tight sealing of a space formed by the shafts (e.g., fluid space 230) from an external space (e.g., external space 600). According to some embodiments, a closed sealing surface 330 is formed in a seal area contiguous to the external space. According to some embodiments, a closed sealing surface 330 is formed by a tight contact over a whole radial section of the sealing surfaces forming a seal area. According to typical embodiments, a closed sealing surface 330 is typically formed by contact of non-patterned (i.e., without a channel arrangement) areas of the sealing surfaces forming a seal area.

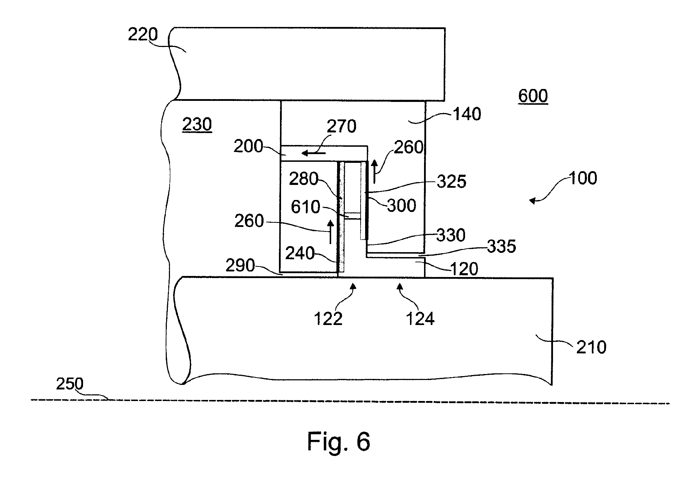

Figure 6 shows a sectional view of a portion of an exemplary sealing device 100. The exemplary sealing device 100 includes a closed sealing surface 330. In the exemplary embodiment, closed sealing surface 330 is formed near or forms part of second seal area 300 and is adjacent to external space 600. Thereby, leakage of a fluid in second seal area 300 through a clearance 335 is prevented. Typically, clearance 335 communicates with an external space 600 and is formed between inner seal element 120 and outer seal element 140.

In at least some of the embodiment according to the present disclosure, a fluid circulates through at least one seal area of the sealing device when a seal element rotates. Such circulation of fluid typically has a lubricating effect on sealing surfaces forming the seal areas. Such lubricating effect is typically desirable in order to avoid or minimize wear of the sealing surfaces. Furthermore, the flow of fluid effected by the sealing device is typically desirable for cooling the sealing surfaces. Such a cooling effect further minimizes wear of the sealing surfaces. Accordingly, the operating lifetime of the sealing device is typically further improved.

In at least some of the embodiments according to the present disclosure, it is typically desirable to link in fluid communication a first and a second seal area through a lubrication hole. Thereby, it is typical that a portion of a fluid within the first seal area directly flows into the second seal area. In typical embodiments, the lubrication hole is disposed in an inner seal element. More specifically, the lubrication hole is typically disposed in a radially oriented portion of the inner seal element (e.g., radial portion 122).

Figure 6 shows a sectional view of a portion of an exemplary sealing device 100. In the exemplary embodiment, sealing device 100 includes a lubrication hole 610. Typically, fluid from first seal area 240 enters into second seal area 300 through lubrication hole 610. Thereby, wearing of the sealing surfaces forming second seal area 300 is typically further reduced through the enhanced lubrication of the second seal area 300 effected by lubrication hole 610.

Typical embodiments of the sealing device according to the present disclosure include an impeller configured to direct a fluid from a first seal area into a drain conduit or conduits. In this manner, the impeller and the drain conduit or conduits typically constitute a fluid pump for generating a directed flow of fluid. According to some embodiments, the impeller and the drain conduit or conduits are configured in a manner such that a flow of fluid is directed in an axial direction with respect to the sealing device (e.g., parallel to common coaxial axis 250).

According to some embodiments, the impeller consists of a notch array including notches or splines. In typical embodiments, the notch array is disposed in the outer part of a radially-extending portion of an inner seal element of the sealing device (e.g., radial portion 122). The notch array is typically designed for generating a directed flow of fluid. For example, according to some embodiments, a flow of fluid is directed parallel to common coaxial axis 250. In some embodiments, the flow of fluid is directed so that the flow of fluid into drain conduit 200 is further directed towards fluid space 230. In such embodiments, the impeller further enhances the draining efficiency through drain conduit 200. In this manner, the impeller typically increases the sealing efficiency of the sealing device when the seal elements rotate with respect to each other. Moreover, in contrast to at least some known labyrinth seals, evacuation of a fluid enclosed within the seal areas is further enabled through the enhanced draining effect (i.e., without requiring the action of gravitational forces).

As set forth above, in at least some embodiments, drain conduit 200 is oriented in a tilted manner with respect to common coaxial axis 250. That is, in these embodiments, drain conduit 200 is oriented to form a helix and/or an elevation angle. As set forth above, in at least some of these embodiments, sealing device 100 includes an impeller which is configured for directing a flow of fluid in the direction in which drain conduit 200 is oriented. That is, such an impeller is configured to direct a flow of fluid in the direction defined by the helix and the elevation angle in which the drain conduit is oriented. In at least some of these embodiments, sealing device 100 further takes advantage of the centrifugal and rotational forces acting on a fluid for enhancing an active draining of a fluid through drain conduit 200.

In at least some of the embodiments where an impeller is constituted by a notch array, the orientation and angle of the notches or splines in the notch array are chosen in view of the rotational characteristics of the shafts. In particular, in at least some embodiments, the notch array is designed to take into account which of the sealing elements are attached to the fast rotating shaft, the rotational speeds of the shafts, the direction of rotation of the shafts, and the characteristics of the fluid. The notches or splines may consist of any element that enables the impeller to confer a directed flow such that the sealing device functions as described herein. More specifically, the notch array may consist of a set of notches or splines configured as a helical toothing. Typically, the helical toothing is oriented to generate a directed flow towards a drain conduit. Alternatively, the impeller is formed by elements, such as blades, or the like, which are suitable for directing a flow of fluid into a drain conduit.

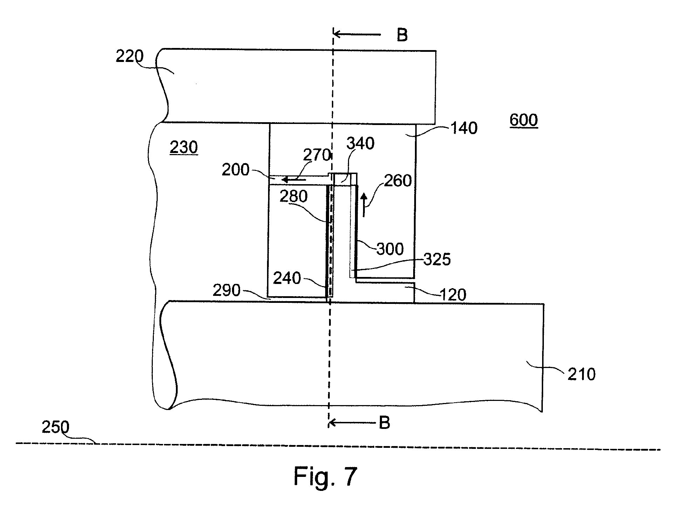

Figure 7 shows a sectional view of a portion of an exemplary sealing device 100. In the exemplary embodiment, an outer portion of inner seal element 120 is provided with a notch array 340. Notch array 340 constitutes an impeller designed for directing a flow of fluid in the direction indicated by arrow 270. In this manner, the efficiency of a sealing device according to embodiments of the present disclosure is typically increased since notch array 340 actively directs a flow of fluid from a seal area into drain conduit 200.

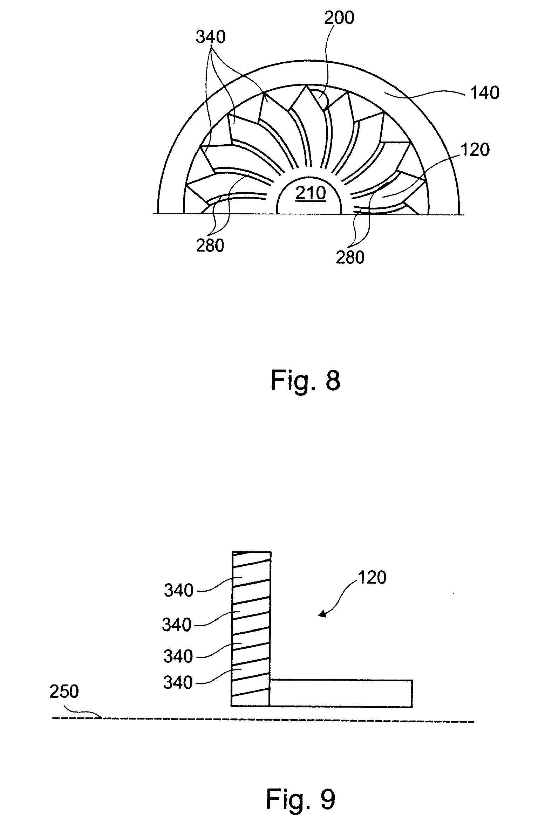

Figure 8 shows a sectional view of the exemplary sealing device 100 of Figure 7 taken along line B-B (shown in Figure 7). In the exemplary embodiment, notch array 340 includes a plurality of splines disposed on an external perimeter of inner seal element 120. The exemplary sealing device 100 includes a channel arrangement 280 disposed on inner seal element 120. In the exemplary embodiment, channel arrangement 280 includes a plurality of curved channels. Alternatively, the channels may be formed in any shape which enables sealing device 100 to function as described herein. For example, the channels may be formed straight, or forming one or more spirals. In the exemplary embodiment, the channels of channel arrangement 280 extend from an inner portion of inner seal element 120 to notch array 340. In the exemplary embodiment, channels arrangement 80 is configured such that each of the channels ends in one of the splines of notch array 340. In this manner, fluid trapped within the channels directly flows into splines of notch array 340 and further into drain conduit 200.

Figure 9 shows a sectional view of a portion of an inner seal element 120 according to some embodiments of the sealing device. In the exemplary embodiment of Figure 9, notch array 340 includes a plurality of splines which are oriented in a direction non-parallel to a coaxial axis of seal elements of the sealing device (e.g., common coaxial axis 250). As set forth above, such a tilted orientation of the splines facilitates direction of a flow of fluid from a seal area in the sealing device into a drain conduit or conduits (e.g., drain conduit 200).

According to some embodiments of the present disclosure, the sealing device includes a housing unit adapted for being secured to any of the shafts, the housing unit being configured to generate a sealing force on at least one of the sealing surfaces of the sealing device. More specifically, in at least some embodiments, an outer seal element of the sealing device includes a housing unit adapted for being secured to the outer shaft. In some embodiments, the housing unit is secured to the outer shaft by integrally forming it on the shaft. Alternatively, the housing unit is secured to the outer shaft by providing fastening means, such as bolted, screw or stud joints, in the housing unit and the outer shaft so that the housing unit can be mounted on the shaft in a releasable manner. Typically, a thrust unit is coupled to the housing unit, the thrust unit being adapted for exerting a sealing force on at least one of the sealing surfaces. In this manner, the thrust unit presses the seal surfaces against each other, thus increasing the sealing efficiency of the device. The term sealing force should be understood as a force exerted on at least one of the sealing surfaces in order to enhance a contact between them. In typical embodiments, the sealing force is an elastic sealing force.

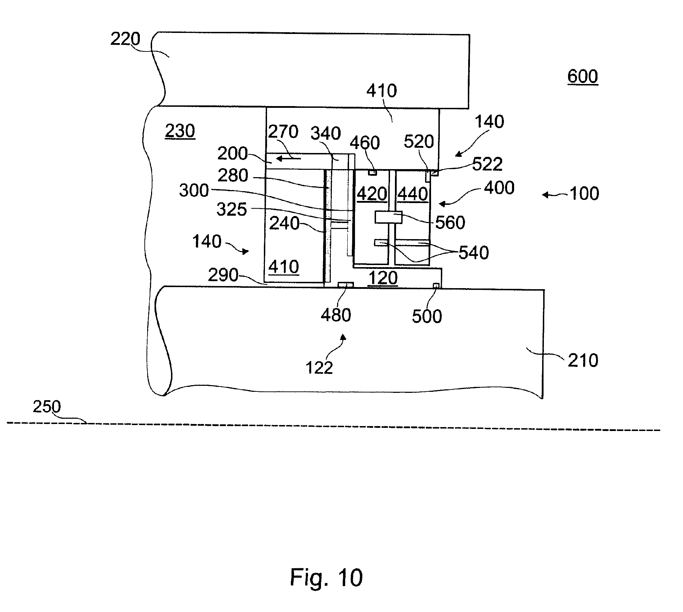

Figure 10 shows a sectional view of a portion of an exemplary sealing device 100. In the exemplary embodiment, outer seal element 140 includes a housing unit 410 and a thrust unit 400. In the exemplary embodiment, housing unit 410 is affixed to outer shaft 220 in a fluid-proof manner through a fastening means such as a screw, bolt, or the like (not shown). In typical embodiments, housing unit 410 and thrust unit 400 are disposed enclosing inner seal element 120. In the exemplary embodiment, housing unit 410 and thrust unit 400 are disposed enclosing radial portion 122 of inner seal element 120. In the exemplary embodiment, housing unit 410 is placed in contact with inner seal element 120.

Typically, a contact area between inner seal element 120 and housing unit 410 forms first seal area 240. Thrust unit 400 may be placed in contact with the inner seal element 120, as in the exemplary embodiment. In the exemplary embodiment, a contact area between inner seal element 120 and thrust unit 400 forms a second seal area 300. In the exemplary embodiment, first seal area 240 is placed proximate to fluid space 230, and second seal area 300 is placed proximate to external space 600. Typically, thrust unit 400 generates a pressure on inner seal element 120 by actively exerting a sealing force thereon. In typical embodiments, such a sealing force is generated parallel to the common coaxial axis 250.

According to some embodiments of the present disclosure, thrust unit 400 may include a first thrust element. Typically, one of the surfaces of the first thrust element constitutes a second outer sealing surface 320. In some embodiments, thrust unit 400 includes a second thrust element secured to housing unit 410. In some embodiments, the second thrust element is secured to the housing unit 410 by being integrally formed thereon. Alternatively, the second thrust element is secured to housing unit 410 by providing fastening means, such as bolted, screw or stud joints, in the second thrust element and housing unit 410 such that the second thrust element can be mounted on housing unit 410 in a releasable manner. Typically, the first thrust element is movable relative to the second thrust element. In particular, the first thrust element may be mounted so as to be movable over a relatively small distance along a longitudinal axis of the sealing device. In this manner, a sealing force may be exerted on inner seal element 120 through the first thrust element. Alternatively, thrust unit 400 is secured to inner seal element 120.

Referring further to Figure 10, thrust unit 400 might include a first thrust element 420 and a second thrust element 440. Housing unit 410 is typically fixed to the outer shaft 220, as in the exemplary embodiment. In the exemplary embodiment, second thrust element 440 is secured to housing unit 410 through an outer fitting key 520. Typically, outer fitting key 520 is for locking second thrust element 440 against rotation relative to housing unit 410. In the exemplary embodiment, first thrust element 420 is secured to housing unit 410 by an outer radial support 460. Typically, first thrust element 420 is secured to housing unit 410 so as to be movable in an axial direction with respect to housing unit 410. Typically, outer radial support 460 consists of a flexible radial support, such as a rubber ring in the form of an O-ring, or the like. Typically, first thrust element 420 exerts a force on inner seal element 120. In particular, outer radial support 460 is typically arranged such that first thrust element 420 is tiltable. That is, it is typical that first thrust element 420 can wobble with respect to common coaxial axis 250.

A movable arrangement of first thrust element 420 typically facilitates that the sealing surfaces in sealing device 100 are in planar, eventually lubricated, contact over a significant area thereof. Such a movable arrangement typically achieves tight contact between sealing surfaces, even in the case that these sealing surfaces suffer unbalancing wear. Furthermore, such a movable arrangement typically compensates for manufacturing tolerances in the different elements of sealing device 100.

According to typical embodiments of the present disclosure, a load force element (or a plurality thereof) couples first thrust element 420 and second thrust element 440 to each other for generating a sealing force. Typically, this load force element includes a resilient member, such as a spring or the like, which generates the sealing force, typically, by compression thereof. Typically, this sealing force is generated by generating a load force by the load force element which is exerted onto first thrust element 420. Typically, the load force is transmitted to inner seal element 120 through first thrust element 420. The load force element may consist of any suitable structure that enables a generation of a sealing force. The load force element may include any suitable component such as, but not limited to, a spring, a plurality of springs, or the like. Typically, the load force is exerted in a direction substantially perpendicular to second outer sealing surface 320. Typically, the load force element is adapted to generate just the necessary elastic sealing force to achieve the sealing effect required by a particular application of a sealing device according to the present disclosure. Thereby, unnecessary friction and wearing of sealing surfaces of the sealing device is avoided. In at least some embodiments, first thrust element 420 is disposed adjacent to inner seal element 120 and second thrust element 440 is secured to outer shaft 220.

In typical embodiments, the load force element, or elements, further accomplishes an anti-rotary lock function. More specifically, the load force element may be configured to avoid that first thrust element 420 rotates relative to second thrust element 440. Alternatively, any element that is suitable for avoiding that first thrust element 420 rotates relative to second thrust element 440 may be included in sealing device 100. For example, a screw, or the like, may couple, in an anti-rotary manner, first thrust element 420 and second thrust element 440. In one of these embodiments, second thrust element 420 is secured to housing unit 410, so that first thrust element 420 rotates together with housing unit 410.

The exemplary embodiment of Figure 10 includes a load force element 560 coupling first thrust element 420 to second thrust element 440. The load force element 560 typically consists of a spring element, or elements (not shown).

First thrust element 420 and second thrust element 440 in the exemplary embodiment are provided with mounting holes 540 for fixing of both thrust elements to each other through a fixing element, such as a screw (not shown). Typically, both units are fixed to each other for mounting or disassembling of the sealing device 100. Typically, mounting holes 540 are adapted for fixing of the thrust elements through a screw, bolt, or the like. Typically, mounting holes 540 are threaded to enable fixing of the thrust elements through a screw.

In a typical procedure for assembling the thrust units in sealing device 100, the thrust units, coupled to each other through load force element 560, are first fixed to each other by a screw (not shown), or the like, provided in mounting holes 540. Then, the thrust units are placed within housing unit 410 facing inner seal element 120. In a further step, first thrust element 420 is coupled to outer radial support 460. As a next step, outer fitting key 520 is mounted between housing unit 410 and second thrust element 440, so that thrust unit 400 is rotary locked to housing unit 410. Typically, an axial lock 522 is mounted between housing unit 410 and second thrust element 440, so that thrust unit 400 is locked against a displacement relative to housing unit 410 along a longitudinal axis of sealing device 100. Finally, the screw provided in mounting holes 540 is extracted in a manner such that load force element 560 applies a load force onto first thrust element 420 in an axial direction and away from the second thrust element 440. In the exemplary embodiment, the load force is coupled to inner seal element 120 for generating a sealing force.

In the exemplary embodiment shown in Figure 10, inner seal element 120 is rotatory locked to inner shaft 210 through an inner fitting key 500. In typical embodiments, inner fitting key 500 is such that inner seal element 120 is movable relative to inner shaft 210. In the exemplary embodiment, an inner radial support 480 couples inner seal element 120 to inner shaft 210, so that inner seal element 120 is tiltable relative to inner shaft 210. Inner radial support 480 typically consists of a flexible radial support, such as, but not limited to, a rubber ring, or the like. In such a movable configuration, when first thrust unit 420 exerts a sealing force on inner seal element 120, inner seal element 120 self-adjusts its position automatically. Thereby, a better tightening of the seal areas is typically achieved. In this manner, a movable configuration of inner seal element 120, combined with a load force element 560, facilitates a compensation of manufacturing tolerances.

In general, according to some embodiments of a sealing device as described above, movable seal components facilitate a closer tightening of seal areas of the sealing device. Close tightening of the seal areas is typically advantageous for compensating eventual wear of sealing surfaces in the seal areas by self-adjustment of the position of seal components. Eventual wear of the sealing surfaces may deteriorate the sealing performance of the seal areas over time when uncompensated. Further, self-adjustment of the position of seal components is typically useful for reduction of manufactured defects. Moreover, for some applications where manufacturing tolerances are above the requirements for correct functioning of the sealing device, seal components having self-adjustable positioning for compensation of such failures are typically desirable.

At least some embodiments of a sealing device according to the present disclosure are for sealing a space formed by an inner shaft and an outer shaft. Some of these sealing devices include an inner seal element adapted for being coupled to the inner shaft and an outer seal element adapted for being coupled to the outer shaft and a thrust unit for exerting a sealing force onto the inner seal element. According to these embodiments, formation of a first seal area is effected between the inner seal element and the outer seal element by the sealing force. Typically, the first seal area includes a first channel arrangement which includes at least one channel for actively draining a fluid from the first seal area when the seal elements rotate with respect to each other.

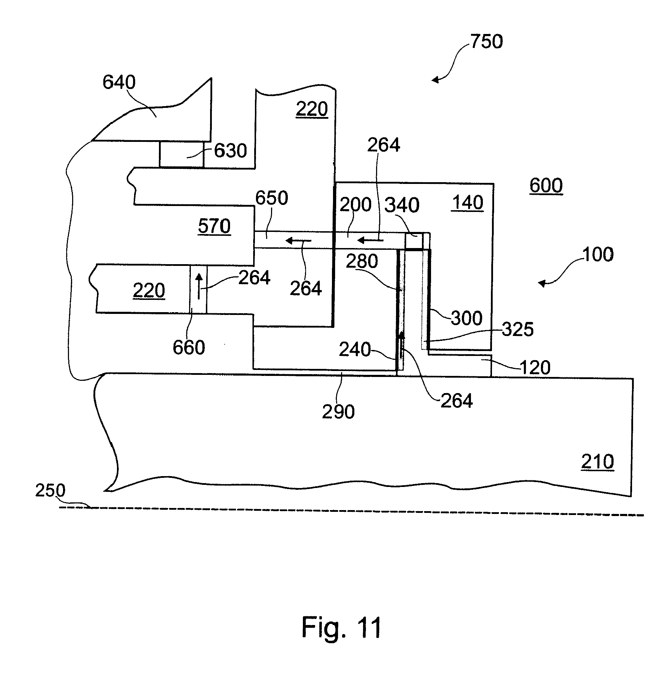

Figure 11 shows a sectional view of a portion of an exemplary gearbox 750. The exemplary gearbox 750 includes a sealing device 100. In the exemplary embodiment, drain conduit 200 of sealing device 100 is aligned with a shaft conduit 650 of outer shaft 220. Typically, as set forth above, drain conduit 200 is oriented to take advantage of a rotational flow of fluid effected by impeller 240 and a centrifugal force acting on a fluid when at least one of the shafts rotate. In a typical embodiment, shaft conduit 650 is oriented in the same direction as drain conduit 200. In general, shaft conduit 650 and drain conduit 200 are orientated so that, when the seal elements of sealing device 100 rotate, fluid from the seal areas is evacuated through the conduits to a drain area 570. In the exemplary embodiment, drain area 570 forms part of a space within gearbox 750. Typically, drain area 570 forms part of a space formed between outer shaft 220 and stationary housing 640. Typically, fluid within first seal area 240 and second seal 300 is drained through drain conduit 200 into shaft conduit 650 and, further, into drain area 570 when the seal elements of sealing device 100 rotate.

According to typical embodiments of a gearbox according to the present disclosure, an outer shaft of the gearbox may be provided with at least one auxiliary conduit for evacuation of a fluid. In the exemplary embodiment of Figure 11, outer shaft 220 is provided with an auxiliary shaft conduit 660. Typically, auxiliary conduit 660 facilitates evacuation of a fluid from an area close to inner shaft 210 into drain area 570 in collaboration of centrifugal forces acting on the fluid when the shafts rotate. A typical path followed by a fluid when the shafts rotate is depicted by arrows in Figure 11.

In typical embodiments, when the shafts of gearbox 750 remain stationary, fluid is evacuated into drain area 570 in collaboration with the gravitational force. To achieve this effect, outer shaft 220 remains stationary in a position such that fluid is evacuated through auxiliary shaft conduit 660 into drain area 570 by the effect of gravitational forces acting on the fluid. In some embodiments, a plurality of such auxiliary shaft conduits 660 is provided in the outer shaft 220.

At least some embodiments of the present disclosure provide a gearbox including an additional seal for sealing a space between an outer shaft and a stationary housing. As an example, gearbox 750 shown in Figure 11 includes an additional sealing device 630. Additional sealing device 630 is disposed to effect sealing of the space between outer shaft 220 and stationary housing 640. Typically, additional sealing device 630 is a labyrinth seal. In general, additional sealing device 630 is any suitable device that enables sealing of a space between a shaft and an stationary housing such as, but not limited to, a radial shaft seal rings or sealing devices according to embodiments of the present disclosure described above.

Typically, each of the seal elements of a sealing device according to embodiments of the present disclosure is integrally formed of a material which is resistant to the conditions to which the seal elements are exposed. Typically, these conditions include high- and low-temperature ranges, chemical properties of a fluid enclosed in a space to be sealed, or wear between seal surfaces of the sealing devices. According to some embodiments, each surface of a sealing area in the sealing device is made of a different material for minimizing wear of the surfaces by friction. For example, one of the sealing surfaces may be made of hardened steel, and the other sealing surface may be made of a low friction material, such as bronze or brass. In some embodiments, antifriction materials, such as Teflon, are applied to the sealing surfaces of the sealing device to further minimize friction between the sealing surfaces.

As used herein, the term shaft should be understood as an element including a cylindrical bar (i.e. an element which is used to support rotating pieces or to transmit power or motion by rotation). Such shafts are typical in many different applications such as brakes, drives, pumps, generators, steering systems, or those found in automobiles gear-boxes or wind turbine gear-drives. A sealing device according to embodiments of the present disclosure is suitable for such applications, and others not explicitly mentioned herein.

More specifically, the embodiments of the sealing device, as set forth above, are particularly suitable for gearboxes including two coaxial shafts which are rotatable relative to a stationary housing. The embodiments set forth above provide a sealing device with low wear and effective sealing during the lifetime of the gearbox. Thereby, maintenance and inspection of the sealing device are significantly reduced.

In particular, a sealing device according to embodiments of the present disclosure is particularly suitable for a gearbox in wind turbines. Typically, a wind turbine gearbox is connected to a main shaft driven by a bladed rotor (i.e., a low speed shaft) and further connected to an electrical generator through another shaft (i.e., a high-speed shaft) to convert the rotational speed of the bladed rotor into a rotational speed suitable for the electrical generator. The terms low and high should be understood as relative to the speed of each shaft. Some types of gearboxes in wind turbines are equipped with coaxial shafts which are rotatable relative to a stationary housing. In some particular designs of gearboxes for wind turbines, an inner shaft thereof does not have access to a stationary housing. A sealing device according to embodiments described herein might be particularly advantageous for such gearboxes.

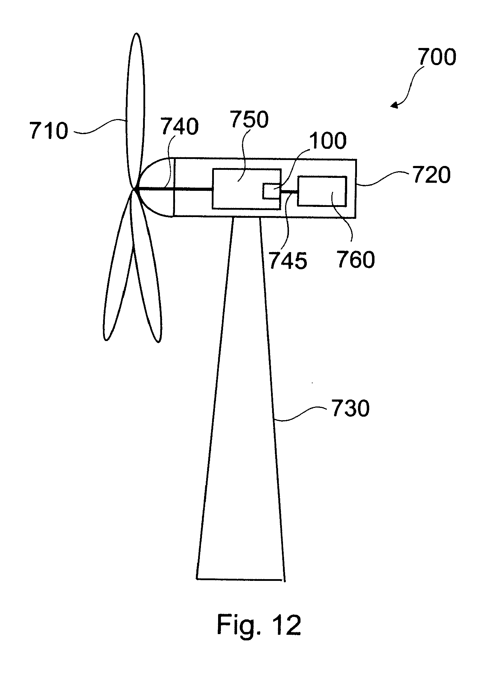

A gearbox including a sealing device, as described herein, may be adapted for implementation in a wind turbine having a bladed rotor and an electrical generator. Typically, such a gearbox couples a low speed shaft to a high speed shaft of the wind turbine. The low speed shaft is coupled to the bladed rotor and the high speed shaft is coupled to the electrical generator. Figure 12 shows an exemplary embodiment of a wind turbine 700, including a bladed rotor 710, a nacelle 720, and a tower 730. Nacelle 720 is provided with a gearbox 750 including a sealing device 100 according to embodiments of the present disclosure. Typically, gearbox 750 is coupled to bladed rotor 710 through a low speed shaft 740. In the exemplary embodiment, gearbox 750 couples low speed shaft 740 to a high-speed shaft 745. High-speed shaft 745 is coupled to an electrical generator for generating electrical energy. Exemplary gearbox 750 is for converting a lower speed of low speed shaft 740 to a higher speed of high-speed shaft 745.

A sealing device and a gearbox according to embodiments of the present disclosure adapted for implementation in wind turbines are typically configured for a rotational speed of the outer shaft between 350 and 500 rpm, such as 400 to 440 rpm. A sealing device and a gearbox, according to embodiments of the present disclosure, adapted for implementation in a wind turbine are typically configured for a rotational speed of the inner shaft between 5 and 20 rpm, such as 12 to 16 rpm. A sealing device and a gearbox according to the present disclosure are suitable for different kinds of applications and for a wide range of rotational speeds of the shafts. For example, the inner shaft may be configured as the fast rotating shaft.

Typically, a sealing device according to at least some of the embodiments of the present disclosure is for avoiding leakage of lubricating fluid in a gearbox of a wind turbine and for active draining of a lubricating fluid, such as lubricating oil, into a drain area of the gearbox. As set forth above, a sealing device according to the present disclosure reduces wear of the sealing components. Such wear reduction typically implies a reduction of the maintenance requirements of a wind turbine. A reduction of maintenance requirements is particularly desirable for a wind turbine since, therein, a gearbox is typically placed in the wind turbine nacelle, which is difficult to access. Further, wind turbine systems are commonly placed in remote locations, such as off-shore, where servicing requirements should be kept at a minimum for economical reasons. Moreover, a sealing device according to the present disclosure has a robust design which avoids contaminants entering the gearbox components. In particular, such a robust design efficiently protects a gearbox from the harsh conditions to which the nacelle of the wind turbine is typically exposed.

Exemplary embodiments of systems for a sealing device, a gearbox, and, in particular, a gearbox adapted for use with a wind turbine, are described above in detail. The systems and methods are not limited to the specific embodiments described herein, but rather, components of the systems and/or steps of the methods may be utilized independently and separately from other components and/or steps described herein. For example, the thrust element is typically combined with an inner seal element including notches in an outer part thereof. Furthermore, as set forth above, one or both of the sealing elements is, or are, typically integrally built into the respective shaft.

Although specific features of various embodiments of the invention may be shown in some drawings and not in others, this is for convenience only. In accordance with the principles of the present disclosure, any feature of a drawing may be referenced and/or claimed in combination with any feature of any other drawing.

This written description uses examples to disclose the invention, including the preferred mode, and to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A sealing device for sealing a space formed by an inner shaft and an outer shaft and for directing a flow of fluid, said inner shaft and said outer shaft being rotatable about a common coaxial axis, said sealing device comprising:
   a) an inner seal element adapted for being coupled to said inner shaft so that said inner seal element is locked against rotation relative to said inner shaft, said inner seal element including a first inner sealing surface; and,
   b) an outer seal element adapted for being coupled to said outer shaft so that said outer seal element is locked against rotation relative to said outer shaft, said outer seal element including a first outer sealing surface;
      wherein said first inner sealing surface and said first outer sealing surface are adapted to form, by contact with each other, a first seal area including a first channel arrangement including at least one channel configured to actively drain a fluid from said first seal area when the seal elements rotate with respect to each other.
2. The sealing device according to clause 1, wherein said first channel arrangement is disposed in at least one of said first inner sealing surface or said first outer sealing surface.
3. The sealing device according to any preceding clause, further comprising a drain conduit for draining a fluid out of said sealing device through a first conduit end of said drain conduit, said drain conduit being formed in at least one of said inner seal element or said outer seal element and ending in a second conduit end forming an opening adjacent to the respective said first inner sealing surface or said first outer sealing surface so that said drain conduit is in fluid communication with said first seal area.
4. The sealing device according to any preceding clause, further comprising an entry conduit for communicating said first seal area with said space, wherein said first channel arrangement is configured to actively drain a fluid from said entry conduit towards said drain conduit through said first seal area when said inner seal element and said outer seal element rotate with respect to each other.
5. The sealing device according to any preceding clause, wherein at least one of said inner seal element or said outer seal element includes an impeller, said impeller being configured to direct a fluid from said first seal area into said drain conduit.
6. The sealing device according to any preceding clause, wherein
   said inner seal element includes a second inner sealing surface;
   said outer seal element includes a second outer sealing surface; and,
   said second inner sealing surface and said second outer sealing surface are adapted to form, by contact with each other, a second seal area separated from said first seal area.
7. The sealing device according to any preceding clause, wherein said second seal area further includes a second channel arrangement including at least one channel configured to actively drain a fluid from said second seal area when the seal elements rotate with respect to each other.
8. The sealing device according to any preceding clause, further including a closed sealing surface configured to seal in a fluid-tight manner said space formed by the shafts at a side of said sealing device from an external space situated at the other side of said sealing device.
9. The sealing device according to any preceding clause, wherein said first inner sealing surface and said second inner sealing surface are disposed substantially parallel to each other.
10. The sealing device according to any preceding clause, wherein said outer seal element further includes a housing unit adapted for being secured to said outer shaft, and a thrust unit coupled to said housing unit, said thrust unit being adapted for exerting a sealing force on said inner seal element.
11. The sealing device according to any preceding clause, wherein said thrust unit includes a first thrust element, including said second outer inner sealing surface, and a second thrust element secured to said housing unit, wherein said first thrust element is movable relative to said second thrust element.
12. The sealing device according to any preceding clause, wherein said first thrust element and said second thrust element are coupled to each other by a load force element for generating said sealing force by exerting a load force onto said first thrust element, said load force being transmitted to said inner seal element through said first thrust element.
13. The sealing device according to any preceding clause, wherein said inner seal element further includes a lubrication hole for fluidly communicating said first seal area with said second seal area.
14. A sealing device for sealing a space formed by an inner shaft and an outer shaft and for directing a flow of fluid, said inner shaft and said outer shaft being rotatable about a common coaxial axis, the sealing device including:
   a) an inner seal element adapted for being coupled to said inner shaft so that said inner seal element is locked against rotation relative to said inner shaft, said inner seal element including a first inner sealing surface;
   b) an outer seal element adapted for being coupled to said outer shaft so that said outer seal element is locked against rotation relative to said outer shaft, said outer seal element including a first outer sealing surface and said first inner sealing surface and said first outer sealing surface being adapted to form, by contact with each other, a first seal area;
   c) a drain conduit for draining a fluid out of said sealing device, said drain conduit being formed in at least one of said inner seal element or said outer seal element and ending with a conduit end forming an opening adjacent to the respective said first inner sealing surface or said first outer sealing surface so that said drain conduit is in fluid communication with said first seal area; and,
   d) an impeller rigidly coupled to said inner seal element or said outer seal element;
      wherein said sealing device is configured to direct a fluid from said first seal area into said drain conduit by rotation of said impeller.
15. The sealing device according to any preceding clause, wherein said first seal area comprises a first channel arrangement including at least one channel configured to actively drain a fluid from said first seal area when the seal elements rotate with respect to each other.
16. The sealing device according to any preceding clause, wherein said drain conduit is disposed along a direction substantially non-parallel to the common coaxial axis, and said impeller is further configured to direct the flow of a fluid in said direction and into said drain conduit.
17. The sealing device according to any preceding clause, further comprising an entry conduit for communicating said first seal area with said space, wherein said sealing device is configured to actively drain a fluid from said entry conduit towards said drain conduit through said first seal area when the seal elements rotate with respect to each other.
18. A gearbox comprising a sealing device, said gearbox including an inner shaft and an outer shaft, the shafts being rotatable about a common coaxial axis, said sealing device comprising:
   a) an inner seal element attached to said inner shaft, said inner seal element including an inner sealing surface; and,
   b) an outer seal element attached to said outer shaft, said outer seal element including an outer sealing surface;
      wherein a seal area is formed by contact of said inner sealing surface and said outer sealing surface, said seal area including a first channel arrangement configured to actively drain a fluid from said seal area when the seal elements rotate with respect to each other.
19. The gearbox according to any preceding clause, wherein said gearbox is adapted for use with a wind turbine including a bladed rotor and an electrical generator.
20. The gearbox according to any preceding clause, wherein said inner shaft is adapted to be coupled to said bladed rotor, and said outer shaft is adapted to be coupled to said electrical generator.

## Claims

1. A sealing device (100) for sealing a space (230) formed by an inner shaft (210) and an outer shaft (220) and for directing a flow of fluid, said inner shaft (210) and said outer shaft (220) being rotatable about a common coaxial axis (250), said sealing device (100) including:
a) an inner seal element (120) adapted for being coupled to said inner shaft (210) so that said inner seal element (120) is locked against rotation relative to said inner shaft (210), said inner seal element (120) including a first inner sealing surface (160); and
b) an outer seal element (140) adapted for being coupled to said outer shaft (220) so that said outer seal element (140) is locked against rotation relative to said outer shaft (220), said outer seal element (140) including a first outer sealing surface (180);
wherein said first inner sealing surface (160) and said first outer sealing surface (180) are adapted to form, by contact with each other, a first seal area (40;240) including a first channel arrangement (80, 280) including at least one channel configured to actively drain a fluid from said first seal area (40, 240) when the seal elements rotate with respect to each other.

2. The sealing device (100) according to claim 1, further comprising a drain conduit (200) for draining a fluid out of said sealing device (100) through a first conduit end of said drain conduit (200), said drain conduit (200) being formed in at least one of said inner seal element (120) or said outer seal element (140) and ending in a second conduit end forming an opening adjacent to the respective said first inner sealing surface (160) or said first outer sealing surface (180) so that said drain conduit (200) is in fluid communication with said first seal area (240),
wherein said sealing device (100) optionally further includes an entry conduit (290) for communicating said first seal area with said space, and wherein said first channel arrangement (80, 280) is optionally further configured to actively drain a fluid from said entry conduit (290) towards said drain conduit through said first seal area when said inner seal element and said outer seal element rotate with respect to each other.

3. The sealing device according to any preceding claim, wherein at least one of said inner seal element (120) or said outer seal element (140) includes an impeller (340), said impeller (340) being configured to direct a fluid from said first seal area (240) into said drain conduit.

4. The sealing device according to any of the preceding claims, wherein said outer seal element (140) further includes a housing unit (410) adapted for being secured to said outer shaft (220), and a thrust unit (400) coupled to said housing unit (410), said thrust unit (400) being adapted for exerting a sealing force on said inner seal element, and wherein said thrust unit (400) optionally further includes a resilient load force element (560) for generating said sealing force.

5. The sealing device (100) according to any of the preceding claims, wherein said inner seal element (120) includes a second inner sealing surface (310);
said outer seal element (140) includes a second outer sealing surface (320); and, said second inner sealing surface (310) and said second outer sealing surface (320) are adapted to form, by contact with each other, a second seal area (300) separated from said first seal area (40, 240).

6. The sealing device according to claim 5, wherein said second seal area (300) further includes a second channel arrangement (325) including at least one channel configured to actively drain a fluid from said second seal area (300) when the seal elements rotate with respect to each other.

7. The sealing device according to claim 5 or 6, wherein said inner seal element (120) further includes a lubrication hole (610) for fluid communication of said first seal area (240) with said second seal area (300).

8. The sealing device (100) according to any of the preceding claims, further comprising a closed sealing surface (30, 330) configured to seal in a fluid-tight manner said space (230) formed by the shafts at a side of said sealing device (100) from an external space situated at the other side of said sealing device (100).

9. A gearbox (750) comprising a sealing device (100) according to any of the preceding claims.

10. A wind turbine comprising a gearbox (750) according to claim 9.
